# EUROPÄISCHE PATENTANMELDUNG

(11) **EP 1 303 098 A2**
(43) Veröffentlichungstag der Anmeldung: **16.04.2003**
(21) Anmeldenummer: 02102288.4
(22) Anmeldetag: 03.09.2002
(51) Int. Cl.: H04L 29/06

(54) **Verfahren für eine Datenübertragung zwischen zwei Datenübertragungseinrichtungen**

(30) Priorität: 21.09.2001 DE 10146551
(71) Anmelder: SIEMENS AKTIENGESELLSCHAFT, 80333 München (DE)
(72) Erfinder: Neuhaus, Ralf, 44534 Lünen (DE); Uecker, Rainer, 45470 Mülheim (DE)

(57) **Zusammenfassung**

Verfahren für eine Datenübertragung zwischen zwei Datenübertragungseinrichtungen (DV1, DV2) über eine Übertragungsstrecke (US), bei dem insbesondere vor Beginn der Datenübertragung festgestellt wird, ob beide Datenübertragungseinrichtungen (DV1, DV2) ein Komprimierungsverfahren für eine hochqualitative Datenübertragung unterstützten. In Fällen, in denen beide Datenübertragungseinrichtungen (DV1, DV2) das Komprimierungsverfahren unterstützen, erfolgt eine Komprimierung der zu übermittelnden Daten auf Basis des an sich bekannten "MPEC 4 Audio Scalable ACC coding low delay"-Verfahrens.

## Beschreibung

Die Erfindung betrifft ein Verfahren zur Datenübertragung, insbesondere im Rahmen von Sprachverbindungen, bei dem eine Datenübertragung zwischen zwei Datenübertragungseinrichtungen mit einer hohen Übertragungsqualität erfolgt.

Ein weit verbreitetes digitales Datenübertragungsprotokoll zur Übertragung von Sprachdaten ist das ISDN (Integrated Services Digital Network) . Die im Rahmen von ISDN für die digitale Übertragung von Daten verwendete Datenübertragungsrate beträgt dabei für unkomprimierte Datenströme 64 kBit/s, wobei hierbei in der Regel eine Bandbreite von 3,1 kHz verwendet wird. Eine Bandbreite von 3,1 kHz entspricht dabei einer Abtastung eines zu übertragenden Sprachsignals mit 3100 Abtastwerten pro Sekunde.

Ein weiteres weit verbreitetes digitales Datenübertragungsprotokoll ist das IP-Protokoll (Internet Protocol), wobei für eine Übertragung von Sprachdaten in IP-Netzen in Abhängigkeit der verwendeten Kodierung bei einer Bandbreite von 3.1 kHz die gleiche Datenübertragungsrate (z.B. Kodierung nach ITU-Standard G.711) wie beim ISDN oder eine durch Komprimierung erreichte geringere Datenübertragungsrate (z.B. Kodierung nach ITU-Standard G723.1) verwendet wird.

Die Verwendung einer Bandbreite von 3,1 kHz führt dazu, daß die Qualität der übertragenen Sprachdaten unter Umständen nicht den Anforderungen der Benutzer gerecht wird. Eine Erhöhung der Bandbreite führt jedoch zu einer Erhöhung der benötigten Datenübertragungsrate, welche häufig nicht zur Verfügung steht.

Insbesondere bei professionellen Anwendungen, wie z.B. Konferenzsystemen, oder für den Einsatz bei anspruchsvollen Benutzern ist jedoch eine höhere Übertragungsqualität, d.h. eine höhere Bandbreite, häufig von hoher Bedeutung.

Der vorliegenden Erfindung liegt daher die Aufgabe zugrunde, ein Verfahren anzugeben, durch welches die Qualität von übermittelten Daten bei gleichzeitiger Beibehaltung der Datenübertragungsrate erhöht wird.

Die Lösung dieser Aufgabe erfolgt erfindungsgemäß mit den Merkmalen des Patentanspruchs 1.

Erfindungsgemäß erfolgt eine Komprimierung von zu übermittelnden Daten, insbesondere Sprachdaten, gemäß dem an sich bekannten "MPEG 4 Audio Scalable AAC Coding low delay"-Verfahren (AAC: Advanced Audio Coding), durch welches eine Übermittlung der Daten mit HiFi-Qualität bei einer gleichbleibenden Datenübertragungsrate von 64 kBit/s ermöglicht wird.

Ein wesentlicher Vorteil des erfindungsgemäßen Verfahrens besteht darin, daß das erfindungsgemäße Verfahren mit nur geringem Aufwand in bereits bestehende Systeme implementiert werden kann.

Ein weiterer Vorteil des erfindungsgemäßen Verfahrens besteht darin, daß bei einer Verwendung des erfindungsgemäßen Verfahrens in Besprechungsräumen auch im Hintergrund liegende Stimmen mitübertragen werden können, die bei bisherigen Komprimierungsverfahren nur stark beeinträchtigt übertragen oder sogar ganz unterdrückt werden.

Vorteilhafte Weiterbildungen der Erfindung sind in den Unteransprüchen angegeben.

Ein Ausführungsbeispiel der Erfindung wird im folgenden anhand der Zeichnungen näher erläutert.

Dabei zeigen:
- Fig. 1:: ein Strukturbild zur schematischen Darstellung der am erfindungsgemäßen Verfahren beteiligten wesentlichen Funktionseinheiten; und
- Fig. 2:: ein Ablaufdiagramm zur Veranschaulichung der beim erfindungsgemäßen Verfahren ablaufenden wesentlichen Verfahrensschritte.

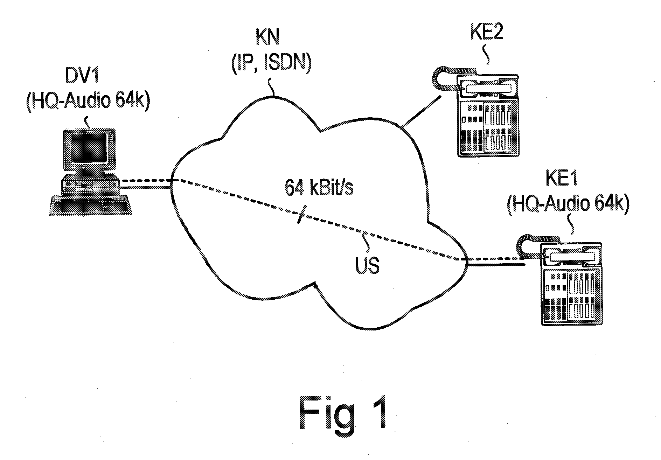

Fig. 1 zeigt ein Kommunikationsnetz KN über das Datenverarbeitungseinrichtungen, beispielsweise Personal Computer, und Kommunikationsendgeräte, beispielsweise Telefone, miteinander verbindbar sind. Beispielhaft sind eine Datenverarbeitungseinrichtung DV1 und zwei Kommunikationsendgeräte KE1, KE2 dargestellt. Das Kommunikationsnetz KN ist beispielsweise ein ISDN-orientiertes Kommunikationsnetz oder ein IP-orientiertes Rechnernetz (durch das in Klammern gesetzte IP, bzw. ISDN veranschaulicht). Alternativ kann das Kommunikationsnetz KN auch durch ein Mobilfunknetz, z.B. ein GSM-Funknetz, realisiert sein. Für eine Datenübermittlung über das Kommunikationsnetz KN stehen Datenübertragungsstrecken US mit einer jeweiligen Datenübertragungsrate von 64 kBit/s zur Verfügung.

Die Datenverarbeitungseinrichtung DV1 und das Kommunikationsendgerät KE1 weisen dabei eine sogenannte "HQ-Audio"-Fähigkeit (durch das in Klammern gesetzte HQ-Audio 64k veranschaulicht) auf. Die "HQ-Audio"-Fähigkeit zeigt an, daß die Datenverarbeitungseinrichtung DV1 und das Kommunikationsendgerät KE1 das "MPEG 4 Audio Scalable AAC Coding low delay"-Verfahren des Fraunhofer-Instituts unterstützen, durch welches eine Komprimierung bzw. Dekomprimierung von über das Kommunikationsnetz KN zu übermittelnden bzw. übermittelten Daten quasi in Echtzeit ermöglicht wird. Durch die Verwendung des "MPEG 4 Audio Scalable AAC Coding low delay"-Verfahrens können Sprachdaten mit einer Bandbreite von 15 kHz bei einer gleichzeitigen Datenübertragungsrate von 64 kBit/s über das Kommunikationsnetz KN übertragen werden. Somit besteht die Möglichkeit einer hochqualitativen Sprachübertragung mit HiFi-Qualität zwischen entsprechend ausgestalteten Datenübertragungseinrichtungen. Das erfindungsgemäße Verfahren, bei dem mittels des "MPEG 4 Audio Scalable AAC Coding low delay"-Verfahrens komprimierte Daten mit einer Datenübertragungsrate von 64 kBit/s übermittelt werden wird im folgenden kurz als "HQ-Audio 64k"-Verfahren bezeichnet.

Die Komprimierung bzw. Dekomprimierung mittels des "MPEG 4 Audio Scalable AAC Coding low delay"-Verfahrens kann dabei in dem Kommunikationsendgerät KE1 durch einen entsprechenden Digitalen Signal Prozessor - in der Literatur kurz mit DSP bezeichnet - und in der Datenverarbeitungseinrichtung DV1 durch eine entsprechende Software-Applikation realisiert werden.

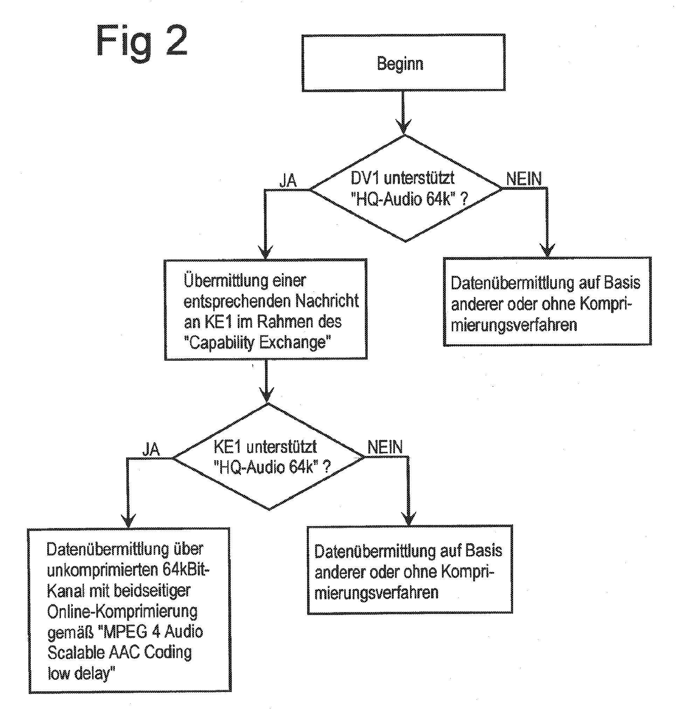

Fig. 2 zeigt ein Ablaufdiagramm zur Veranschaulichung der beim erfindungsgemäßen Verfahren ablaufenden wesentlichen Verfahrensschritte. Gemäß dem vorliegenden Ausführungsbeispiel erfolgt eine bidirektionale Datenübermittlung zwischen der Datenverarbeitungseinrichtung DV1 und dem Kommunikationsendgerät KE1, wobei die Datenübermittlung durch die Datenverarbeitungseinrichtung DV1 initialisiert wird.

In einem ersten Schritt wird überprüft, ob die Datenverarbeitungseinrichtung DV1 das "HQ-Audio 64k"-Verfahren unterstützt. Ist dies nicht der Fall, erfolgt eine Datenübermittlung zwischen der Datenverarbeitungseinrichtung DV1 und dem Kommunikationsendgerät KE1 über die Übertragungsstrecke US auf Basis anderer oder ohne Komprimierungsverfahren.

Unterstützt die Datenverarbeitungseinrichtung DV1 dagegen das "HQ-Audio 64k"-Verfahren wird eine entsprechende Meldung über das Kommunikationsnetz KN an das Kommunikationsendgerät KE1 übermittelt. Die Meldung wird im Rahmen des normalen Fähigkeitsaustausches - in der Literatur häufig als "Capability Exchange" bezeichnet - übermittelt. Im Rahmen dieses normalen Fähigkeitsaustauschs wird beispielsweise bei IP-orientierten Netzen vereinbart, welche Codierung - z.B. G.711 oder G.723.1 - bei der Übertragung von Daten verwendet wird. Ein hierfür bekanntes Signalisierungs- bzw. Übertragungsprotokoll in IP-orientierten Netzen ist z.B. H.323/H.450 der ITU. Dieser normale Fähigkeitsaustausch kann auf einfache Weise um das "HQ-Audio 64k"-Verfahren erweitert werden. Im Rahmen von ISDNorientierten Netzen kann die Meldung im Rahmen einer Verbindungsaufbausignalisierung übermittelt werden. Ein hierfür bekanntes Signalisierungs- bzw. Übertragungsprotokoll in ISDNorientierten Netzen ist z.B. DSS1.

In Fällen, in denen das Kommunikationsendgerät KE1 das "HQ-Audio 64k"-Verfahren nicht unterstützt, erfolgt eine Datenübermittlung zwischen der Datenverarbeitungseinrichtung DV1 und dem Kommunikationsendgerät KE1 über die Übertragungsstrecke US auf Basis anderer oder ohne Komprimierungsverfahren. Unterstützt das Kommunikationsendgerät KE1 dagegen - wie im vorliegenden Ausführungsbeispiel - das "HQ-Audio 64k"-Verfahren erfolgt eine Datenübermittlung über die unkomprimierte Übertragungsstrecke US mit einer Datenübertragungsrate von 64 kBit/s mit einer beidseitigen Online-Komprimierung gemäß dem "MPEG 4 Audio Scalable AAC Coding low delay"-Verfahren.

Erfolgt während der Datenübermittlung eine Umschaltung der Übertragungsstrecke US von einer das "HQ-Audio 64k"-Verfahren unterstützenden zu einer das "HQ-Audio 64k"-Verfahren nicht unterstützenden Datenübertragungseinrichtungen, beispielsweise von dem Kommunikationsendgerät KE1 zum Kommunikationsendgerät KE2 so erfolgt eine automatische Umschaltung auf ein anderes Komprimierungsverfahren, bzw. die Daten werden unkomprimiert über die Übertragungsstrecke US übertragen. Dies ist jedoch mit einer Verringerung der Qualität verbunden.

Analog hierzu wird in Fällen, in denen eine Umschaltung einer Übertragungsstrecke US zwischen einer das "HQ-Audio 64k"-Verfahren unterstützenden zu einer das "HQ-Audio 64k"-Verfahren nicht unterstützenden Datenübertragungseinrichtungen auf eine Übertragungsstrecke US zwischen zwei das "HQ-Audio 64k"-Verfahren unterstützende Datenübertragungseinrichtungen erfolgt, das Komprimierungsverfahren automatisch auf das "HQ-Audio 64k"-Verfahren umgeschaltet.

## Patentansprüche

1. Verfahren für eine Datenübertragung zwischen zwei Datenübertragungseinrichtungen (DV1, KE1) über eine Übertragungsstrecke (US),
bei dem festgestellt wird, ob beide Datenübertragungseinrichtungen (DV1, KE1) ein Komprimierungsverfahren für eine hochqualitative Datenübertragung unterstützen, und
bei dem in Fällen, in denen beide Datenübertragungseinrichtungen (DV1, KE1) das Komprimierungsverfahren unterstützen, eine Komprimierung der zu übermittelnden Daten auf Basis des an sich bekannten "MPEC 4 Audio Scalable ACC coding low delay"-Verfahrens erfolgt.

2. Verfahren nach Anspruch 1,
**dadurch gekennzeichnet,**
**daß** die Feststellung, ob die beiden Datenübertragungseinrichtungen (DV1, KE1) das Komprimierungsverfahren für eine hochqualitative Datenübertragung unterstützten vor Beginn der Datenübertragung erfolgt.

3. Verfahren nach Anspruch 2,
**dadurch gekennzeichnet,**
**daß** die Feststellung in einem der Datenübermittlung vorgeschalteten "Capability Exchange" erfolgt.

4. Verfahren nach einem der Ansprüche 1 bis 3,
**dadurch gekennzeichnet,**
**daß** die Daten im Rahmen einer Sprachverbindung übertragen werden.

5. Verfahren nach einem der Ansprüche 1 bis 4,
**dadurch gekennzeichnet,**
**daß** in Fällen, in denen während der Datenübertragung die Übertragungsstrecke (US) auf eine das Komprimierungsverfahren nicht unterstützende Datenübertragungseinrichtung (KE2) umgeschaltet wird, automatisch ein Wechsel auf ein anderes Komprimierungsverfahren erfolgt, oder die Datenübertragung unkomprimiert erfolgt.

6. Verfahren nach einem der Ansprüche 1 bis 5,
**dadurch gekennzeichnet,**
**daß** die Daten über die Übertragungsstrecke (US) mit einer Übertragungsrate von 64 kBit/s übertragen werden.

7. Verfahren nach einem der Ansprüche 1 bis 6,
**dadurch gekennzeichnet,**
**daß** eine Datenübermittlung über die Übertragungsstrecke (US) auf Basis des ISDN-Übertragungsprotokolls erfolgt.

8. Verfahren nach einem der Ansprüche 1 bis 6,
**dadurch gekennzeichnet,**
**daß** eine Datenübermittlung über die Übertragungsstrecke (US) auf Basis des IP-Übertragungsprotokolls erfolgt.
